**Europäisches Patentamt**

**European Patent Office**

**Office européen des brevets**

(19)

(11) Numéro de publication : **0 015 010**
**B1**

(12) **FASCICULE DE BREVET EUROPÉEN**

(45) Date de publication du fascicule du brevet :
**24.08.83**

(51) Int. Cl.³ : **E 06 B  3/66**, E 06 B  9/24

(21) Numéro de dépôt : **80200012.5**

(22) Date de dépôt : **07.01.80**

(54) **Dispositif de réalisation d'écran pour occultation totale ou partielle d'une enceinte.**

(30) Priorité : **06.02.79 BE 193295**

(43) Date de publication de la demande :
**03.09.80 Bulletin 80/18**

(45) Mention de la délivrance du brevet :
**24.08.83 Bulletin 83/34**

(84) Etats contractants désignés :
**DE FR IT NL**

(56) Documents cités :
**BE A 751 783**
**BE A 869 963**
**FR A 920 318**
**US A 3 368 862**

(73) Titulaire : **Hanchard, Jean-Pierre**
**11, Rue Rivelaine**
**B-1428 Lillois (BE)**

**Servais, Charles**
**24, Rue Forgeur**
**B-4000 Liège (BE)**

(72) Inventeur : **Hanchard, Jean-Pierre**
**11, Rue Rivelaine**
**B-1428 Lillois (BE)**
Inventeur : **Servais, Charles**
**24, Rue Forgeur**
**B-4000 Liège (BE)**

Jouve, 18, rue St-Denis, 75001 Paris, France

Dispositif de réalisation d'écran pour occultation totale ou partielle d'une enceinte

La présente invention se rapporte à un dispositif ayant pour but de réaliser l'occultation d'une enceinte conformément au préambule de la revendication 1. De très nombreux procédés existent qui ont pour but de faire écran pour les ouvertures de bâtiments ou autres. Les techniques les plus neuves peuvent servir : on citera l'application des propriétés photochromiques comme dans le FR-A-1 584 280, ou celle des photoconducteurs polarisés dont une illustration est le BE-A-677 236.

Le procédé auquel il est fait appel dans le cadre de la présente invention est proposé avec des techniques moins récentes mais plus économiques. Il exige l'application de deux feuilles de matière transparente, parallèles. Conjointement avec ces deux éléments transparents, on utilise un liquide intercalaire coloré dont les propriétés d'absorption dans telle région du spectre optique sont exploitées. Un tel procédé est connu ainsi qu'en témoigne le US-A-192 843. L'idée essentielle du procédé est, selon l'effet désiré, d'utiliser les propriétés d'absorption ou de transparence d'un liquide enfermé entre deux vitres planes parallèles : selon que l'espace entre les vitres transparentes est occupé par un liquide transparent ou au contraire que ledit espace est rempli d'un liquide absorbant telle région du spectre, on aura passage intégral de la lumière ou absorption du faisceau lumineux en une lumière colorée complémentaire de la lumière incidente.

Un cas particulièrement intéressant est celui ou les liquides utilisés absorbent la lumière sur la totalité du spectre et où, par conséquent, l'intensité lumineuse est faible, réalisant ainsi l'occultation totale.

Semblable application du procédé ci-dessus évoqué au cas de l'occultation totale ou partielle d'une enceinte est le but de la présente invention.

Il est déjà connu, d'après le brevet belge BE-A-869 963 et d'après le brevet français FR-A-920 318 de réaliser un écran dans le but d'occulter une enceinte en utilisant les propriétés optiques d'un faisceau lumineux au travers duquel sont présentés des fluides, lesdits fluides étant amenés dans l'espace compris entre deux lames de verres transparentes pour y interagir avec la lumière éclairant la pièce, dans lequel le transport des fluides se fait suivant un trajet essentiellement vertical, de bas en haut ou inversement.

Selon le BE-A 869 963 lesdits fluides sont deux liquides, dont l'un est teinté ou opaque, non miscible, de masse spécifique différente, qui se déplacent par gravité entre deux vitrages parallèles formant la surface de traversée de la lumière. L'écoulement s'effectue depuis un réservoir supérieur situé au-dessus de ladite surface vers un réservoir inférieur situé au-dessous de cette même surface. Le mouvement inverse des liquides est assuré par une pompe manuelle. Les deux réservoirs sont placés dans l'épaisseur du châssis supportant les vitrages et le réservoir supérieur est en communication avec l'atmosphère.

Selon le FR-A-920 318, lesdits fluides sont constitués par un liquide coloré et un gaz. Les deux fluides sont enfermés hermétiquement entre deux vitres parallèles. Un réservoir déformable en caoutchouc est placé à la base des vitres et l'action de compression exercée sur le réservoir fait monter le liquide coloré dans l'espace situé entre les deux vitres, le gaz étant alors comprimé.

Les autres dispositifs qui ont été proposés pour mettre en œuvre les propriétés des liquides interposés entre deux feuilles de matériaux transparents rigides, exigent l'application d'au moins une pompe, d'un conduit d'amenée, de moyens hydrauliques et notamment de clapets anti-retour qui garantissent la retenue du liquide dans le cadre.

L'assemblage de ces pièces mécaniques est délicat et leur réglage est difficile. La purge d'air est indispensable mais malaisée.

Par ailleurs, d'autres dispositifs connus prévoient en général, une circulation des liquides dans tout le périmètre entourant les lames de verre. Dans ce contexte et dans le cas où les propriétés optiques de réfraction, réflexion et transparence sont appliquées, il y a lieu de mentionner le DE-B-1 949 865 et les DE-A-2 002 852 et DE-A-2 002 855.

En plus de détails relatifs aux caractéristiques physicochimiques des lames de verre et des liquides mis en œuvre, ces documents, comme le BE-A 869 963 et le FR-A-920 318, décrivent un dispositif de transport des liquides utilisés. Ces moyens de transport sont compliqués. De même, les dispositifs qui mettent en jeu, à partir de réservoirs différents, plusieurs liquides colorés susceptibles de s'écouler dans l'espace compris entre deux vitres, ne sont pas simples. Un exemple en est le dispositif selon le US-A-3 368 862.

Si l'on veut réaliser un dispositif tel que ceux évoqués ci-dessus dans lequel on évite la mise en contact avec l'atmosphère et on assure électromécaniquement le transport des liquides, l'état actuel de la technique ne permet pas la construction d'une seule et même entité, en fait d'un seul et même châssis à l'intérieur duquel tous les composants sont enfermés.

En faisant usage de soufflets déformables, selon la partie caractérisante de la revendication 1, dont la compression de l'un et la dilatation synchrone et même amplitude de l'autre se fait à l'aide d'un très petit moto-réducteur pouvant tourner dans les deux sens, une solution à cette difficulté est possible. Le placement du dispositif est particulièrement aisé puisqu'il se présente comme un châssis dont la pose crée aux bornes la différence de potentiel nécessaire au fonctionnement du moto-réducteur. L'invention sera mieux comprise à la lecture de la description qui suit et à l'examen des dessins joints qui en représentent un mode de réalisation préféré :

La figure 1 est une vue frontale d'un châssis pourvu de vitrage, châssis muni d'un dispositif d'occultation selon l'invention.

La figure 2 est une vue suivant la coupe A-B de la figure 1.

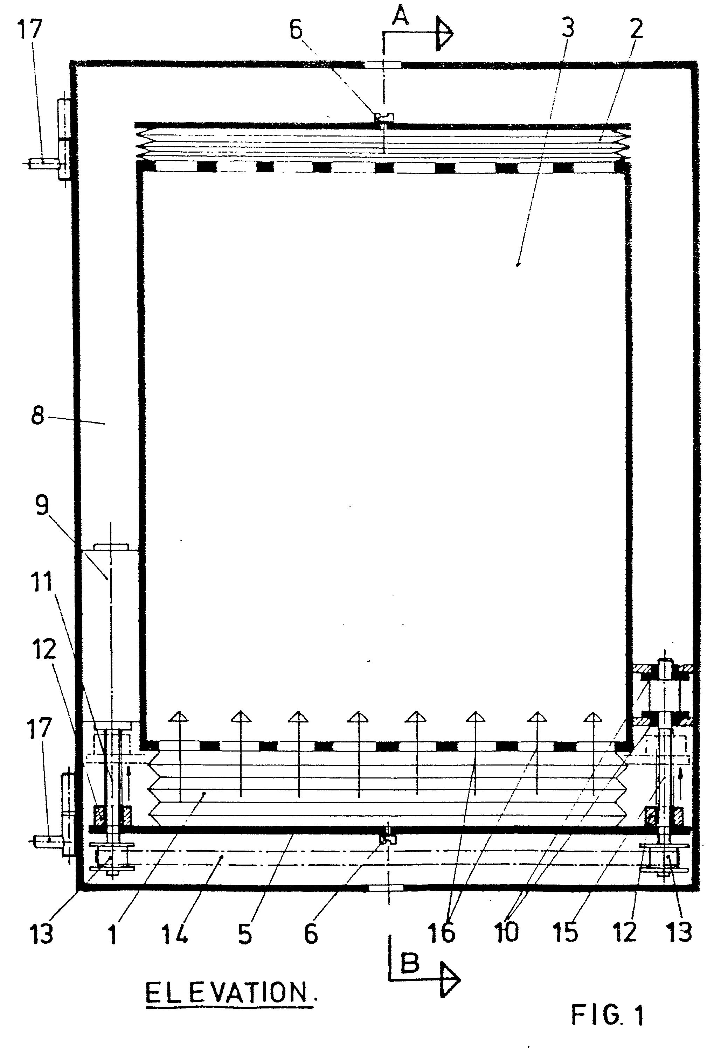

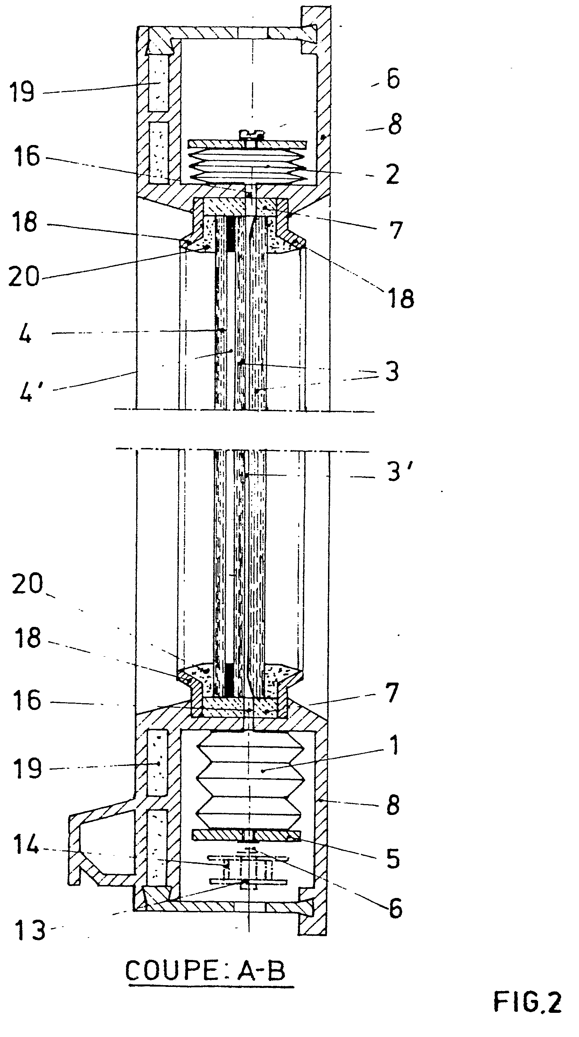

Les repères numériques utilisés pour la désignation des parties et organes du dispositif selon l'invention, sont identiques sur les deux figures annexées. Pour la compréhension, il sera fait appel aux deux figures séparément ou simultanément selon les besoins. En consultant les figures, on voit que deux ou trois feuilles transparentes 3 et 4 et rigides constituées par des lames de verre à faces parallèles constituent la surface offerte à la lumière du jour. Un couple de vitres est désigné par 3 et est maintenu à une certaine distance 3' (Fig. 2). Dans le cas d'un triplet de lames, une troisième feuille plane 4 (Fig. 2) est disposée en avant de la paire de vitres 3 à une distance 4' supérieure à l'espace 3' séparant les vitres 3. Le rôle de cette feuille supplémentaire 4 est non seulement celui d'un support, non indispensable, garantissant la robustesse de l'ensemble, mais également celui d'un isolant thermique et acoustique. La pose, l'alignement, la fixation de ces trois feuilles sont réalisés conformément au savoir faire de l'homme de l'art et ne font pas l'objet de la présente invention. Ainsi, par exemple, le report à la figure 2 montre que, de façon classique, la construction de l'ensemble comporte un encadrement de retenue 18, des joints 20 faits de mastic d'étanchéité à base de caoutchouc siliconé et une partie d'isolation thermique 19. Au-dessus et en bas du châssis 8, sont disposés deux soufflets élastiques 1 et 2 résistants qui s'étendent sur toute la largeur de passage du faisceau lumineux traversant la fenêtre. Ces deux soufflets 1 et 2 sont identiques et sont destinés à contenir les liquides mis en œuvre. Le soufflet du bas 1 est muni d'une plaque de base ou support 5 empêchant toute flexion de ce soufflet. Les bouchons 6 permettent le remplissage ou la vidange des soufflets 1 et 2. Comme déjà signalé, ces derniers sont raccordés sur toute la largeur des feuilles transparentes en verre. A la Fig. 1 on verra clairement, à l'aide de flèches orientées vers le haut, que la ligne de raccordement du soufflet 1 est discontinue et est constituée alternativement de lignes de fixation mécaniques du soufflet 1 et d'ouvertures verticales linéaires 16 assurant vers le haut ou vers le bas le passage de tout liquide qui quitte le soufflet 1 ou qui y redescend. Dans le châssis 8, un moteur électrique compact (moto-réducteur 9) est monté. Ce moto-réducteur 9, rotatif, réversible, est capable de développer un couple qui est transmis à une tige filetée 11. De cette tige est solidaire la plaque de base 5 dont on a déjà parlé et sur laquelle est fixé le soufflet 1.

Un report à la figure 1 montre clairement que le mouvement rotatif du petit moteur électrique garantit, suivant son sens, la translation de la plaque de base vers le haut ou vers le bas. Cette translation est réalisée en un mouvement rectiligne uniforme par la présence de deux poulies et d'une chaîne ou éléments de transmission 14 qui relient les tiges filetées 11 et 15 : tige 11, côté moteur et tige 15, côté paliers 10.

Les différents éléments mécaniques ayant été définis ci-dessus on comprendra leur rôle et par conséquent le fonctionnement du dispositif, en suivant le mode opératoire donné de façon complète dans ce qui suit : pour simplifier l'exposé, il sera supposé que l'enceinte dont le châssis 8 supporte le vitrage, doit être éclairée ou occultée totalement à volonté. L'extension à une occultation partielle est immédiate et fait partie du domaine d'application du dispositif selon l'invention. On considère deux liquides de coloration différente, non miscibles, de masse spécifique différente. De tels liquides sont connus et employés dans la technique de réalisation des écrans pour ouverture de bâtiments. En plus des deux critères ci-dessus, des liquides ou mélanges de liquides, lorsqu'on les emploie en système fermé, doivent présenter des garanties pour la santé et la sécurité, quelque sévères que soient leurs conditions d'emploi. Un exemple de paire de liquides acceptable est l'eau et un hydrocarbure halogéné, de la série aliphatique, teinté.

Lors du montage du châssis 8, le soufflet du bas 1 est rempli du liquide le plus lourd, le volume introduit étant au moins égal au volume de l'espace 3' (Fig. 2). Le second liquide, plus léger, est introduit par les ouvertures 16 visibles à la figure 1.

La quantité est sensiblement la même que pour le premier liquide. A ce stade-ci, le premier soufflet 1, celui du bas, est à l'état dilaté. On fixe, par des moyens connus en soi, le triplet de lames de verre 3 et 4, c'est-à-dire, la feuille antérieure 4 comme support, et la paire de vitres 3. On procède à la fixation du soufflet supérieur 2 en le maintenant à l'état comprimé. Ces opérations étant réalisées, on dévisse le bouchon 6 dont est pourvu le soufflet 2. Par l'ouverture ainsi pratiquée, on remplit l'espace compris entre les deux vitres 3 à l'aide du liquide le plus léger. L'air refoulé s'échappe librement, le soufflet 2 étant toujours à l'état comprimé. Il va de soi que le remplissage peut se faire, en respectant l'ordre de masse spécifique décroissant, sur un châssis dont les vitres sont en place, (Remplissage par bouchon 6, soufflet 2).

Ainsi se trouve réalisée la configuration originale selon l'invention : un volume bien défini, constitué de la superposition de deux ou plusieurs liquides non miscibles, de masse spécifique différente, volume constant, sans espace inutile, déformable, sans mise en contact avec l'atmosphère et de façon à faire migrer entre deux feuilles transparentes, un liquide passant d'un soufflet qui se comprime à un autre soufflet qui se dilate en synchronisme et d'une même amplitude de manière telle que l'écoulement entre les deux feuilles de verre soit rigoureusement laminaire.

Ce qui précède permet de comprendre, à titre illustratif, que l'occultation totale pourrait être réalisée en prenant deux liquides présentant les qualités mentionnées ci-dessus, l'un étant clair, l'autre étant opaque.

Quand on veut éclairer la pièce la configuration dans le châssis est la suivante : le soufflet supérieur 2 est comprimé, le liquide clair, le plus léger, *est localisé entre la paire de vitres parallèles 3 et* le soufflet inférieur 1 est dilaté par la présence du liquide opaque. La mise sous tension du moteur 9 provoque la rotation de son axe qui, par les tiges filetées 11 et 15 assure une translation uniforme vers le haut de la plaque de base 5. Le soufflet inférieur 1 est dès lors comprimé forçant le liquide opaque dans les ouvertures 16 en direction de l'espace entre les vitres 3. Le liquide clair est simultanément refoulé dans le soufflet supérieur 2. A l'aide d'un limitateur de course non représenté, l'action du moto-réducteur 9 est arrêtée dès que le front opaque de liquide ascendant a dépassé la frontière supérieure des vitres. A ce moment, le soufflet supérieur 2 est déprimé et contient du liquide clair et une légère garde de liquide opaque. On comprendra aisément que dans le cas d'un troisième liquide, plus lourd que les deux précédents, assurant la demi-obscurité, il suffit de continuer l'action du moteur 9 qui comprimera encore davantage le soufflet inférieur 1 pour en expulser la dernière partie du volume de liquide opaque de telle sorte qu'en fin de compte, dans l'espace entre les vitres 3 le liquide semi-opaque soit présent, surplombé par le liquide opaque et le liquide clair et localisés dans cet ordre, du bas vers le haut dans le soufflet supérieur 2. Il va de soi que la rotation du moteur 9 en sens inverse fera défiler les liquides dans l'autre sens du fait de leurs propriétés de non-miscibilité et de leurs masses spécifiques différentes.

Le but principal de l'invention est de présenter une simplification des dispositifs de circulation de liquides originale pour occultation totale ou partielle d'une enceinte. Une autre caractéristique de l'invention, formant unité avec elle, vise à présenter d'importantes précisions qui permettent de mettre en œuvre le dispositif d'occultation dans un châssis 8 dont la pose, et l'alimentation électrique soient particulièrement aisés. Enfermer les différents éléments électriques et mécaniques décrits ci-dessus ne présente pas de difficulté puisque l'on dispose de nos jours, de substances polymères à haute densité dont le formage est facile.

Les volumes à encastrer sont minimes : dans le cas d'une fenêtre dont la hauteur de vitre serait de 1,7 m, la largeur de 1 m et l'épaisseur entre les vitres de 0,5 mm, le volume d'un soufflet 1 et 2 serait de 1,7 litre ; pour une masse spécifique moyenne de 1,5 gramme par $cm^3$, le moteur 9, en négligeant la résistance élastique des soufflets 1 et 2, devra fournir, au maximum, une force de 25,5 Newtons (2,6 kgf). Un moto-réducteur donnant un couple de $410^{-3}$ Nm est largement suffisant et, en version miniature, occupe un volume de 1 $dm^3$, volume aisément logé dans un châssis. La figure 1 montre une telle disposition interne au châssis 8. L'alimentation est, selon une caractéristique de l'invention réalisée par un couple de conducteurs reliant électriquement les bornes du moteur aux pentures 17 de la fenêtre. Venant de la boîte de dérivation voisine, ces deux fils d'alimentation sont agencés de telle sorte que les *deux pôles soient reliés aux éléments mâles de la* charnière qui reçoit le châssis. Un dispositif de sécurité permet d'éviter que le contact fortuit, manuel ou autre, entre lesdits éléments mâles ne provoque un court-circuit. Cette sûreté pourrait, par exemple, être une monture à baïonnette disposée sur un des deux éléments mâles et dont la disposition engagée ne pourrait être actionnée que lors de l'enfoncement de l'élément femelle. En conséquence de la disposition ci-dessus, quand le châssis 8 est fixé au cadre fixe, les éléments mâles et femelles étant engagés, une différence de potentiel existe entre les conducteurs à l'intérieur du châssis 8 conduisant aux bornes du moto-réducteur 9. Les surfaces externes de la charnière sont, par contre, électriquement isolées et peuvent être touchées sans danger. Pour le fil de terre du moteur, si ce dernier en est pourvu, aucune préférence n'est donnée à son mode de connexion : il semble aisé de le mener le long du trajet d'un des conducteurs d'amenée de courant et de le relier, de façon connue en soi, à un élément de faible résistance électrique pouvant jouer le rôle de terre. Pour compléter cette alimentation électrique indispensable au fonctionnement, il est facile de prévoir, discrètement placé sur le côté du châssis, un interrupteur permettant de fermer le circuit et, donc, d'actionner le moteur ; l'interrupteur peut, au besoin, faire partie d'un régulateur à cadran rotatif ou être suivi d'un rhéostat qui servirait à assurer un démarrage progressif du moto-réducteur 9 servant à véhiculer les liquides par déformation d'un soufflet.

Il va de soi que l'invention n'est nullement limitée aux modes de réalisation représentés et décrits, l'étendue de la protection étant déterminée par la teneur des revendications. Elle est susceptible de variantes suivant les buts et applications envisagés. Elle résout en une configuration originale, simple, modulaire, facile à mettre en œuvre, le problème de la réalisation d'un dispositif d'occultation nécessitant le transport de liquides qui sont, à volonté, présentés dans le champ du faisceau lumineux entrant dans une enceinte de manière à en modifier l'éclairage.

**Revendications**

1. Dispositif pour réaliser un écran dans le but d'occulter une enceinte en utilisant les propriétés optiques d'un faisceau lumineux au travers duquel sont présentés des liquides de coloration différente, lesdits liquides étant amenés dans l'espace (3') compris entre au moins deux feuilles planes (3, 4), rigides, parallèles en un matériau transparent et montées de manière étanche dans un châssis (8) pour y interagir avec la lumière éclairant la pièce ; ledit dispositif comprenant deux réservoirs (1 et 2) placés dans le châssis (8), respectivement au-dessus et au-dessous des feuilles transparentes (3) constituant la surface de traversée de la lumière, reliés à l'espace étanche (3') compris entre les feuilles transparentes (3) pour former un volume rempli avec au moins deux liquides, non miscibles, de masse spécifique différente, choisis en fonction de leurs propriétés optiques pour obtenir soit la transparence, soit l'occultation partielle ou totale de la surface de traversée de la lumière, les liquides se déplaçant verticalement d'un réservoir à l'autre par écoulement laminaire en passant dans l'espace (3') situé entre les feuilles transparentes (3) par l'intermédiaire d'une série d'ouvertures verticales (16) réparties sur toute la longueur des bords supérieurs et inférieurs (18) de la surface de traversée de la lumière ; dispositif caractérisé en ce que le volume contenant les liquides est constant, déformable et sans relation avec le milieu extérieur tel que l'atmosphère, que les deux réservoirs sont des soufflets déformables (1 et 2), l'un étant dilaté alors que l'autre est comprimé et vice versa de telle manière que le déplacement des liquides commandés par la déformation d'un soufflet (1 ou 2) dans un sens entraîne la déformation synchrone et de même amplitude de l'autre soufflet (1 ou 2) dans le sens contraire.

2. Dispositif selon la revendication 1, caractérisé en ce que la déformation du soufflet inférieur (1) est réalisé par action électromécanique sur des tiges filetées (11) et (15) solidaires d'une plaque de base (5) qui leur est perpendiculaire et sur laquelle est fixé le soufflet inférieur (1).

3. Dispositif selon la revendication 2, caractérisé en ce que la première tige filetée (11) est reliée à l'axe d'un élément moteur (9) et en ce que la seconde tige filetée (15) est montée libre en rotation dans des paliers (10, 12) et qu'elle est couplée avec la première.

4. Dispositif selon la revendication 3, caractérisé en ce que l'élément moteur est un moto-réducteur (9) à interrupteur manuel ou à mise sous tension progressive et dont l'axe peut tourner dans les deux sens.

5. Dispositif selon l'une quelconque des revendications précédentes, caractérisé en ce que toutes les parties mises en œuvre, c'est-à-dire le moto-réducteur (9), les tiges filetées (11 et 15), les paliers de fixation (10, 12), les deux soufflets (1 et 2) sont intérieurs à un châssis (8) qui supporte deux vitres planes (3) en verre.

6. Dispositif selon la revendication 5, caractérisé en ce que les points de fixation (17) du châssis (8) sont munis d'un agencement de sécurité, agencement tel que seule la pose du châssis (8) puisse créer aux bornes de l'élément moteur (9), la différence de potentiel nécessaire à son fonctionnement, le circuit électrique étant par ailleurs fermé ou ouvert par un interrupteur suivi éventuellement d'un rhéostat.

## Claims

1. A variable fluid media filter device for total or partial darkening of a space in which optical properties of light rays are used with different liquids of various colours, said liquids being brought upwards in the space (3') in between at least two transparent panes (3, 4) ; these panes are rightly and tightly fixed in a frame (8) to interact with the light illuminating a room. The cavity which contains the liquids is made of two reservoirs (1, 2) which are embodied in the frame (8) respectively above and below said transparent sheets (3, 4). These sheets or panes are reached by the light. Both small reservoirs (1, 2), the cavity between both panes (3, 4) are a single volume which is filled with at least two immiscible liquids, of substantially different specific gravity. The optical properties of these liquids are selected so as to ensure a total transparency, a medium- or a total darkening effect. These liquids are forced to vertically flow from one reservoir to the other with a laminar flow and so flowing, they move in the cavity (3') located between the transparent panes (3) through a plurality of vertical apertures (16). Said apertures are distributed alongside the whole length of the upper and lower (18) edges of the surfaces reached by light ; the here-in above disclosed device being characterized by the fact that the liquids containing volume is constant, can expand or contract without connexion to the outside such is to the atmosphere, further by the fact that the reservoirs are deformable bellows (1 and 2), the former is expanded while the latter is simultaneously compressed and vice-versa so that liquids moving in a direction because of deformation of one bellow (1 or 2) consequently result in a synchroneous deformation of the other (2 or 1) with same amplitude but in opposite direction.

2. Device according to claim 1, further characterized by an electromechanical unit which realizes the change of shape of the bottom bellow (1) by acting on threaded bars (11) and (15) which are fixed on a base plate (5) perpendicular to these and where the lower bellow (1) rests.

3. Device according to claim 2, with the additional feature that the first threated element (11) is slaved to the axis of the shaft of a motor (9), whereas the second bar (15) is free to rotate on the bearings (10, 12) and is coupled to the first threated element (11).

4. Device according to claim 3, characterized in the fact that the motor (9) is an electrical motor with reduction gearing with manual contact breaker or progressive voltage increase and with possible motion in both rotation senses.

5. Device according to anyone of the above claims in which all the mechanical parts, i. e. : motor (9), threaded elements (11, 15), bearings (10, 12), bellow (1 and 2), are completely embodied in a single frame (8) which supports both glass window panes (3, 4).

6. Device according to claim 5, in which the frame (8) is attached at fixation points (17) which are provided with a safety structure which is designed in such a way that the necessary voltage to actuate the motor (9) is only available when the frame (8) is entirely weighing on both points (17), the electrical circuit being separately open or closed by means of a conventional breaker eventually series connected with a rheostat.

**Ansprüche**

1. Eine Vorrichtung für Verdunklung eines Raumes mit Hilfe der optischen Eigenschaften von Licht, das eine Schicht von zwei verschiedenfarbigen Flüssigkeiten durchdringt. Bei gewünschter Verdunklung füllt eine Flüssigkeit den dichten Zwischenraum (3') von zwei lichtdurchlässigen in einem Kastenrahmen (8) parallel montierten Scheiben (3, 4). Der Kastenrahmen (8) ist derart konstruiert, dass er in seinen horizontalen Teilen, d. h. oberhalb und unterhalb der Scheiben (3, 4) zwei Behälter (1, 2) enthält die zur Aufnahme der Flüssigkeiten bestimmt sind. Der untere Behälter wird mit zwei gewichtspezifisch und optisch unterscheilichen sowie unvermischbaren Flüssigkeiten gefüllt. Von dort gelangen beide Flüssigkeiten zum Zwecke der partiellen oder totalen Verdunklung in vertikalem und gegebenenfalls laminarem Fluss durch den Zwischenraum (3') der Scheiben (3, 4) in den oberen Behälter oder umgekehrt. Zur Erreichung dieses Flusses wurde an beiden inneren horizontalen Begrenzungen des Zwischenraumes (3') über die gesamte Breite, eine Reile vertikaler Oeffnungen (16) gebohrt um der Flüssigkeit eine Passage aus bzw. in die Behältnisse zu schaffen. Diese Abschirmvorrichtung ist dadurch gekennzeichnet dass das Volumen der Behältnissen (1, 2) und der Zwischenraumes (3') konstant bleibt, die Flüssigkeit unveränderlich sowie keinerlei äusseren Einflüssen z. B. atmosphärischer Art ausgesetzt ist. Die Behälter selbst sind verformbar und arbeiten nach « Balg-Prinzip » (1, 2) d. h.

während der eine Behälter zusammegepresst wird, um die Flüssigkeit in Bewegung zu setzen und herauszupressen, wird der andere ausgedehnt um sie aufzunehmen. Das zusammenpressen des einen Balges (1, 2) bewirkt gewissermassen synchroon die Ausdehnung und Aufnahmebereitschaft des gegenüberliegenden Balg-Behältnisses (2, 1).

2. Vorrichtung gemäss Anspruch 1, dadurch gezeichnet dass der untere balg (1) auf eine Basisplatte (5) befestigt und dass seine Verformung durch elektro-mechanische Wirkung auf zwei an der Platte (5) perpendikular angebrachten Gewindestücke (11, 15) bewirkt wird.

3. Vorrichtung nach Anspruch 2, dadurch gekennzeichnet dass das eine Gewindestück (11) an der Antriebwelle des Motors (9) befestigt ist und dass das zweite Gewindestück (15) in den Lagern (10, 12) drehbar montiert und ebenfalls mit dem ersten gekoppelt ist.

4. Gemäss Anspruch 3, Vorrichtung dadurch gezeichnet dass der Motor (9) ein Motor-Reduktor ist mit Handhaltung oder mit steigender Spannungstärke und dass er drehbar in beiden Rotationsrichtungen montiert wird.

5. Vorrichtung nach einem der vorhergehenden Ansprüche, dadurch gekennzeichnet dass ihre Bestandteile (d. h. : Motor-Reduktor (9), Gewindestücke (11, 15) die Fixationslager (10, 12) ; die Balgen (1, 2), im Inneren des die Glassscheiben (3) tragenden Rahmens (8) eingebaut sind.

6. Vorrichtung nach Anspruch 5, dadurch gezeichnet dass die Fixationspunkte (17) des Rahmens (8) mit einem Sicherheitsystem versehen sind, sodass die für die Drehung des Motors (9) notwendige elektrische Spannung nur dann hervorgebracht wird, wenn der Rahmen (8) am entsprechenden Punkten (17) im Spezialscharnieren befestigt ist. Ferner wird mit Hilfe eines Schalters und eventuell eines zuzätzlichen Schaltwiderstandes die Vorrichtung unter Strom gesetzt oder abgeschaltet.

0 015 010

ELEVATION.

FIG. 1

COUPE : A-B

FIG.2